Europäisches Patentamt

European Patent Office

Office européen des brevets

(11) Publication number: **0 445 514 A1**

## EUROPEAN PATENT APPLICATION

(21) Application number: 91100922.3

(22) Date of filing: 24.01.91

(51) Int. Cl.⁵: **F16L 37/08**

(30) Priority: 07.03.90 US 489661

(43) Date of publication of application:
11.09.91 Bulletin 91/37

(84) Designated Contracting States:
AT BE CH DE DK FR GB IT LI NL

(71) Applicant: **MASTER INDUSTRIES, INC.**
**400 Elroy-Ansonia Road**
**Ansonia, Ohio 45303(US)**

(72) Inventor: **Johnston, Robert Louis**
**240 Riegle St.**
**Ansonia, Ohio 45303(US)**

(74) Representative: **Dipl.-Ing. H. Hauck, Dipl.-Ing.**
**E. Graalfs, Dipl.-Ing. W. Wehnert, Dr.-Ing. W.**
**Döring**
**Mozartstrasse 23**
**W-8000 München 2(DE)**

(54) Brake line quick connect joint.

(57) A quick connector for tubes which seals and locks a tube (70) when inserted into the connector. The structure includes a simple housing with telescoping tapered parts (56,60) sealed in the housing under axial compression against a sharp cornered ring (50) which engages the tubing surface. No tools or manual manipulation are needed other than simple insertion into the assembled housing.

FIG.2

## Field of Invention

A conduit connector for use in automotive assembly of brake lines for rapid insertion of line conduits requiring no tools.

## Background and Features of the Invention

There are many uses for pneumatic or hydraulic tubing in machine tools, automotive vehicles and numerous other applications. In many installations, it is desirable to be able to connect the tubing quickly and effectively. When it is necessary to use wrenches or other tools to make the connections, much time is lost and tight joints may not always result unless the involved workman is acting with skill and care.

In the installation of the tubing in assembly lines, such as tubing for automotive transmissions, cooling systems and heaters, speed of installation and quality is essential, it is an object of the present invention to provide a connector fitting assembly into which the end of tubing can be inserted and pushed in where it will instantly be held against withdrawal and sealed against leakage.

It is an object of the present invention to provide a quick connect unit in a single housing which will be effective in providing a seal with a quick insertion without the necessity of any wrenches or manual manipulation.

To this end a single body element is utilized with a threaded nipple end to be received in a threaded recess in, for example, a brake system such as a brake wheel cylinder or a brake master cylinder. This element may be threaded in with a power wrench which will insure proper tightening within the single housing. Within the body element are mating tapered elements overlying each other with a compressible O-ring at one end together with a tube locking ring and spacer rings at each end. These parts are retained by a snap ring. As previously indicated, the use can be in any parts where quick and secure assembly is desirable, automotive or other fields.

Additional objects and features of the invention will be apparent in the following description and claims in which the principles of the invention are set forth together with details to enable persons skilled in the art to practice the invention, all in connection with the best mode presently contemplated for the invention.

## Brief Description of the Drawings

DRAWINGS accompany the disclosure and the various views thereof may be briefly described as:

FIG. 1, an exploded view of all the parts of thee joint.

FIG. 2, a sectional view of the assembled joint with a conduit in place.

## Detailed Description of the Invention and the Manner and Process of Using It

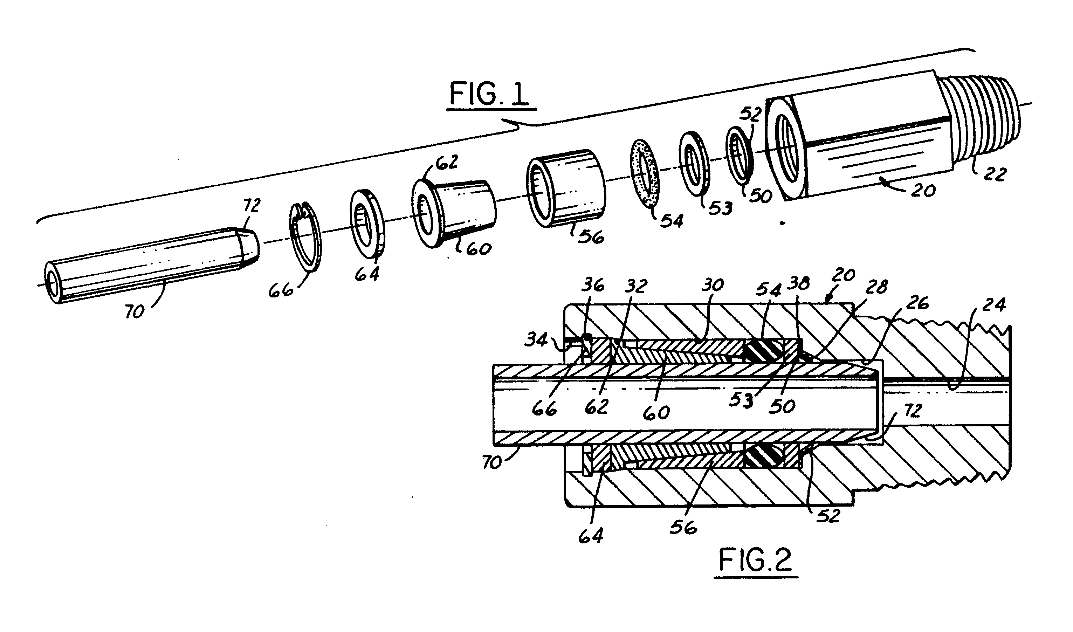

WITH REFERENCE TO THE DRAWINGS, in FIG. 1 the basic fitting for the connector is shown at 20 having a utility connection in the form of a threaded nipple 22 at one end and a hexagonal outer surface. A stepped cylindrical recess or bore within the fitting 20 consists of a passage 24 at the threaded end, an intermediate portion 26, a tapered transition section 28 and main section 30. A final section at the entrance end consists of a low taper 32 and an enlarged entrance section 34. A groove 36 is provided in the section 34 for a locking ring as will be described. A radial shoulder 38 is positioned between the tapered section 28 and the main section 30 of the bore.

The innermost part within the bore is a locking retainer ring 50 which has a radial portion lying against the shoulder 38 and an angled flange 52 with a sharp inner corner to engage the circumference of an inserted tube. The retainer ring is preferably formed of metal but may be formed of a dense plastic. Behind the retainer ring 50 is a spacer ring 53 within the main section of the bore backed by a compressible O-ring 54 which takes on an oval shape when the end of a tube is inserted as will be described.

In contact with this O-ring 54 is an outer large end tapered seal element 56 preferably formed of a fluoro plastic. Telescoped over the element 56 is an inner tapered seal tubing 60 having an outer flange 62 within the tapered section 32. A spacer ring 64 is interposed behind the flange 62.

The parts as described above are assembled under axial pressure and retained by a standard snap-ring 66.

As assembled, the fitting is ready to have a tubing end 70 inserted into the bore within the assembled parts. The tubing 70 preferably has an outer taper 72 on the insertion end to facilitate insertion. Upon insertion, the sharp corner of the tapered ring section 52 of the retainer ring grabs the outer surface of the tube which is usually a plastic or metal material. The O-ring is forced outwardly by the insertion of said tube to take an oval shape and this exerts an axial pressure on the outer tapered seal element which is forcing the inner tapered element against the surface of the tube. Thus, there is a secure seal externally of the tube provided by the O-ring 54 which is compressed radially to an oval shape as the tube 70 is thrust into the assembly. The O-ring provides the major seal. The telescoping tapered parts 56 and 60 close up any radial gap between the tubing and the body 20 and this also prevents any extrusion of the O-ring. The ring 53 is a protective ring between the O-ring and the lock ring 50 and also prevents extrusion of the O-ring. The back-up ring 64 holds the assembly firmly in place within the snap ring 66. Accordingly, the insertion of the tubing end 70 into the assembled fitting provides a firm retention of the tube as well as a reliable liquid seal. Pressure in the tube will simply enhance the seal.

In practical use, the fitting 20 can be threaded into a receiving recess, for example, in an automotive part such as a wheel brake cylinder and a master brake cylinder with all of the part assembled within the fitting. Then on the assembly line, a worker can simply insert the end of the connecting tube into the fitting and it is permanently installed. It can be removed, of course, by removing the split retainer and withdrawing the assembled arts.

The suggested use for an automotive brake line is to indicate that the retainer and seal may be used in applications where a secure union is required under conditions which may involve high pressures and sometimes sudden application of pressure. However, the connection may be used in any equipment where tubing is used and a quick assembly is desirable.

## Claims

1. A self-contained quick connect fitting assembly for tubes into which a tube can be pushed and locked and sealed comprising:

   (a) a single main fitting body having a utility connection means at one end and an open-ended cylindrical recess at the other end,

   (b) inner and outer telescoping parts within said recess having, respectively, tapered surfaces in contact, and having inner and outer cylindrical surfaces, the outer surface to position adjacent the cylindrical recess and the inner surface to lie adjacent the outer surface of an inserted tube,

   (c) first means at one end to retain one of said parts axially within said recess, and second means at the other end of said telescoping parts to resiliently urge the other of said parts toward said inner part,

   (d) a retainer ring having an inner edge to engage and retain a tube surface when a tube is inserted into said recess,

   (e) said second means serving to retain said retainer ring in said cylindrical recess of said body.

2. A quick connect fitting as defined in claim 1 in which said cylindrical recess has a radial shoulder against which an outer portion of said retainer ring is seated.

3. A quick connect fitting as defined in claim 2 in which said second means comprises a resilient O-ring.

4. A quick connect fitting as defined in claim 3 in which an annular spacer ring is positioned on the side of said O-ring opposite a telescoping part to block extrusion of said O-ring when compressed radially.

5. A quick connect fitting as defined in claim 3 in which said second means comprises an O-ring positioned between an annular confining end of the other of said parts and an annular spacer ring to block extrusion of said O-ring as compressed radially by the introduction of a tube to be retained.

FIG.1

FIG.2

4

**European Patent Office**

# EUROPEAN SEARCH REPORT

Application Number

## EP 91 10 0922

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 712 813  (PASSERELL)<br>* column 1, lines 7 - 10; figure 1 *<br>– – – | 1-5 | F 16 L 37/08 |
| A | GB-A-2 178 501  (VICTAULIC COMPANY PLC)<br>* page 1, line 130 - page 2, line 10; figure 1 *<br>– – – | 1-5 | |
| A | GB-A-2 174 468  (DANA CORP.)<br>* figures 1, 4 *<br>– – – – – | 1,2,3 | |
| | | | **TECHNICAL FIELDS SEARCHED (Int. Cl.5)**<br><br>F 16 L |

The present search report has been drawn up for all claims

| Place of search | Date of completion of search | Examiner |
|---|---|---|
| The Hague | 12 April 91 | HUBEAU M.G. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document